# EUROPÄISCHE PATENTANMELDUNG

(11) **EP 0 887 365 A2**
(43) Veröffentlichungstag der Anmeldung: **30.12.1998**
(21) Anmeldenummer: 98111087.7
(22) Anmeldetag: 17.06.1998
(51) Int. Cl.: C08G 77/08, C08G 77/10

(54) **Verfahren zur Herstellung von Polyorganosiloxanen**

(30) Priorität: 23.06.1997 DE 19726556
(71) Anmelder: Hüls Silicone Gesellschaft mit beschränkter Haftung, D-01610 Nünchritz (DE)
(72) Erfinder: Schickmann, Harald, 01662 Meissen (DE); Wendt, Heinz-Dieter, 01445 Radebeul (DE)
(74) Vertreter: Zöllner, Gudrun

(57) **Zusammenfassung**

Die Erfindung betrifft ein zweistufiges Verfahren zur Herstellung von Polyorganosiloxanen, wobei in beiden Stufen der gleiche Katalysator verwendet wird.

## Beschreibung

Die Erfindung betrifft ein zweistufiges Verfahren zur Herstellung von Polyorganosiloxanen, wobei in beiden Stufen der gleiche Katalysator verwendet wird. Die erhaltenen Siloxane sind hochmolekulare Polymere, die zur Herstellung von beispielsweise heißvulkanisierenden Siliconkautschuk dienen.

Die Herstellung von linearen oder auch verzweigten Polysiloxanen kann nach verschiedenen Methoden erfolgen. Schon seit langem bekannt und häufig praktiziert wird die ringöffnende Polymerisation von cyclischen Siloxanen und die dadurch erfolgende Bildung von hochmolekularen Polysiloxanen.

Weiterhin ist es möglich Polysiloxane, die monofunktionelle Siloxaneinheiten enthalten miteinander oder mit dimeren monofunktionellen Siloxanen oder oligomeren linearen oder verzweigten Siloxanen die monofonktionelle Gruppen im Siloxangerüst enthalten zu äquilibrieren. Die Reaktion, bei der es in Gegenwart eines Katalysators durch ständige Spaltungen und Neuknüpfungen von Siloxanbindungen zu einer Umordnung des Siloxangerüstes kommt, wird dabei bis zum Gleichgewicht geführt. Das Molekulargewicht (und damit auch die Viskosität) der Endprodukte wird über die Anzahl der monofunktionellen Einheiten geregelt, wobei das mittlere Molekulargewicht des Endproduktes umso höher ist, je niedriger die Konzentration der monofunktionellen Siloxaneinheiten in den Ausgangsprodukten war. Im Gleichgewichtszustand enthält das Reaktionsprodukt noch einen beträchtlichen Anteil an cyclischen Siloxanen (bei Polydimethylsiloxanen etwa 13 Gew.-%), die meistens unerwünscht sind und nach Desaktivieren des Polymerisations- und Äquilibrierungskatalysators entfernt werden müssen.

Als Katalysatoren für die Polymerisations-/Äqilibrietungsreaktionen sind u. a. Alkalimetallhydroxide, Alkalisiloxanolate, Ammonium-, Phosphoniumsiloxanolate, Mineralsäuren und deren Abkömmlinge, saure und basische Ionenaustauscher, säure- oder basenaktivierte Bleicherden und Aktivkohlen bekannt. Allen diesen Katalysatoren ist gemeinsam, daß sie außer der ringöffnenden Polymerisation von Cyclosiloxanen auch die Äquilibrierungsreaktion initiieren, was letztendlich zur Bildung besagter unerwünschter Gleichgewichtscyclen durch Recyclisierung der gebildeten Siloxanbruchstücke führt.

Eine weitere Methode zur Herstellung von Polysiloxanen ist die sogenannte Polykondensation mit partieller Äquilibrierung. Bei dieser Verfahrensweise geht man von silanolhaltigen niedermolekularen Polydimethylsiloxanen aus, die in Gegenwart von monofunktionellen Siloxaneinheiten und geeigneten Katalysatoren einer Kondensationsreaktion unterzogen werden, bei der es ebenfalls gleichzeitig zu einer Äquilibrierung und damit zum Einbau der als Kettenstopper fungierenden monofunktionellen Siloxangruppen kommt.

Als Katalysatoren für die Kondensations-/Äqulilibrierungsreaktionen sind u. a. Phosphornitrilchlorid bzw. dessen Umsetzungsprodukte bekannt. Im Gegensatz zu der oben beschriebenen reinen Äqulibrierung, kann dieses kombinierte Kondensations-/Äquilibrierungsverfahren so geführt werden, daß keine cyclischen Siloxane entstehen und demzufolge der Schritt der Entflüchtigung der Polymere entfallen kann.

Da die Kondensationsreaktion zur Herstellung von Siloxanen eine Gleichgewichtsreaktion ist, muß zur Herstellung silanolarmer und damit qualitativ hochwertiger Produkte unter vermindertem Druck gearbeitet werden. Das hat den Nachteil, daß leichtflüchtige Ausgangskomponenten mit monofunktionellen Einheiten für diese Reaktion nicht eingesetzt werden können, so ist es beispielsweise nicht möglich, die leicht zugänglichen Disiloxane, wie z.B. Hexamethyldisiloxan oder 1,1,3,3-Tetramethyl-1,3-divinyldisiloxan oder 1,1,3,3-Tetramethyldisiloxan zu verwenden. Deshalb ist es erforderlich, die benötigten, mindestens kurzkettigen Siloxane mit den entsprechenden monofunktionellen Endgruppen in einem vorgelagerten Polymerisations-/Äquilibrierungsverfahren gesondert herzustellen. Von großem Nachteil dabei ist, daß, wie oben beschrieben, für das Kondensationsverfahren andere Katalysatoren erforderlich sind als für die Äquilibrierung, was zu negativen Beeinflussungen führen kann.

Aufgabe der vorliegenden Erfindung war es daher, ein Verfahren zur Herstellung von linearen bzw. verzweigten Polyorganosiloxanen durch Reaktion von linearen und/oder cyclischen silanolgruppenfreien Siloxanen mit silanolgruppenhaltigen Diorganosiloxanen zu entwickeln, bei welchem von leichtflüchtigen silanolgruppenfreien oligomeren Siloxanen ausgegangen werden kann und wobei im gesamten Herstellungsprozeß nur ein einziger Katalysator verwendet wird, um so gegenseitige Beeinflussungen und/oder Verunreinigungen auszuschließen.

Desweiteren sollen mit dem erfindungsgemäßen Verfahren durch kombinierte Kondensations/Äqulibrierungsreaktionen Polyorganosiloxane herstellbar sein, die auch andere funktionelle Siloxaneinheiten aufweisen als die in den eingesetzten silanolgruppenhaltigen oligomeren Diorganosiloxanen enthaltenen, ohne daß dafür eine gesonderte Herstellung von höhermolekularen, nichtflüchtigen Ausgangsverbindungen erforderlich ist.

Erfindungsgemäß werden die linearen bzw. verzweigten Polyorganosiloxane hergestellt, indem in einer ersten Stufe lineare und/oder cyclische silanolgruppenfreie Siloxane äquilibriert werden und das erhaltene Reaktionsprodukt mit silanolgruppenhaltigen Diorganosiloxanen umgesetzt wird, wobei beide Stufen in Gegenwart des gleichen Katalysators durchgeführt werden.

Das bedeutet, daß innerhalb eines Verfahrens zuerst eine Äquilibrierung und dann eine kombinierte Kondensation/Äquilibrierung in Gegenwart nur einer Verbindung, die beide Reaktionstypen katalysiert stattfindet.

Als Katalysator für beide Stufen werden bevorzugt Phosphornitrilchlorid und/oder dessen Umsetzungsprodukte eingesetzt. Besonders bevorzugt ist das Umsetzungsprodukt von Phosphornitrilchlorid mit einer Verbindung der allgemeinen Formel [R¹₃SiO(R¹₂SiO)ₘ]₃P=O, worin R¹ unabhängig voneinander gleiche oder verschiedene, ungesättigte und/oder gesättigte einwertige Kohlenwasserstoffreste mit 1 bis 6 Kohlenstoffatomen oder Wasserstoff mit der Maßgabe bedeutet, daß nur ein Wasserstoffatom pro Silicium gebunden ist und m einen Wert zwischen 0 und 1000 annimmt, wobei sich während der Umsetzung bildende, leichtflüchtige, Chlor enthaltende Silicium-Verbindungen bei Bedarf vollständig oder teilweise abgetrennt werden können. Der so erhaltene Katalysator kann noch ggf. mit cyclischen und/oder linearen Dimethylsiloxanen auf Anwendungskonzentration verdünnt werden.

Bevorzugt wird der Katalysator in Konzentrationen von 10 bis 50 ppm, bezogen auf die gesamte Siloxanmenge und berechnet als Menge des verwendeten Phosphornitrilchlorides, das zur Herstellung des Katalysators verwendet wurde, eingesetzt.

Besonders bevorzugt wird die gesamte Menge des Katalysators in der ersten Stufe zugegeben, so daß das Reaktionsprodukt aus der ersten Stufe gegenüber den in der zweiten Stufe eingesetzten silanolgruppenhaltigen Siloxanen katalytisch aktiv ist und damit keine nochmalige Katalysatorzugabe nötig ist.

Weiterhin können als Katalysatoren alle Verbindungen eingesetzt werden, die in Abhängigkeit von der Anwendungskonzentration einerseits in der vorgelagerten Reaktion die Polymerisation/Äquilibrierung von Siloxanen und andererseits die Polykondensation bewirken. Hierfür geeignete Katalysatoren sind Verbindungen oder Gemische von Verbindungen aus der Gruppe der Polychlorphosphazene, deren Umsetzungsprodukte mit Organosiliciumverbindungen sowie fluorierte Alkansulfonsäuren.

Als Siloxankomponenten werden Verbindungen der allgemeinen Formeln R₃SiOSiR₃ und/oder (R₃SiO_{1.2})₂(R₂SiO)ₐ und/oder 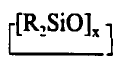 eingesetzt, worin R unabhängig voneinander gleiche und/oder verschiedene, substituierte und/oder unsubstituierte, gesättigte und/oder ungesättigte einwertige Kohlenwasserstoffreste mit 1 bis 6 Kohlenstoffatomen oder Wasserstoff mit der Maßgabe, daß an jedem Silciumatom nur ein Wasserstoffatom gebunden ist, bedeutet, a Werte zweischen 0 und 3000 und x Werte zwischen 3 und 12 annehmen kann.

In der ersten Stufe werden als lineare und/oder cyclische silanolgruppenfreie Siloxane bevorzugt leichtflüchtige Verbindungen, wie Hexamethyldisiloxan, 1,1,3,3-Tetramethyl- 1,3-divinyldisiloxan, 1,1,3,3-Tetramethyldisiloxan und/oder 1,3,5,7-Tetramethyl-1,3,-5,7-tetravinylcyclotetrasiloxan eingesetzt. Es ist jedoch auch möglich diese leichtflüchtigen Verbindungen im Gemisch mit polymeren silanolgruppenfreien Verbindungen, wie beispielsweise Polydimethylsiloxanen mit Trimethylsilyl-Endgruppen, zu verwenden.

Als silanolgruppenhaltige niedermolekulare Diorganosiloxane in der zweiten Stufe werden bevorzugt α,ω-Dihydroxypolydimethylsiloxane, beispielsweise der lineare Anteil des Dimethyldichiorsilan-Hydrolysates eingesetzt.

Als im wesentlichen lineare Polyorganosiloxane, die monofunktionelle Gruppen enthalten, sind Verbindungen zu verstehen, die in ihrer Struktur mindestens zwei Siloxygruppen M der allgemeinen Formel

R₃SiO_{0.5}- M

und mindestens eine Siloxygruppe D der allgemeinen Formel

-R₂SiO- D,

worin R unabhängig voneinander gleiche oder verschiedene, substituierte und/oder unsubstituierte, gesättigte und/oder ungesättigte einwertige Kohlenwasserstoffreste mit 1 bis 6 Kohlenstoffatomen oder Wasserstoff mit der Maßgabe, daß an jedem Silciumatom nur ein Wasserstoffatom gebunden ist. bedeutet, enthalten.

Verzweigte Polyorganosiloxane sind Verbindungen, die zusätzlich zu den oben genannten Siloxygruppen noch Siloxygruppen T der allgemeinen Formel 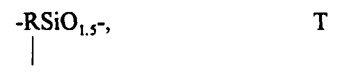 worin R die oben angegebene Bedeutung besitzt, enthalten.

Cyclische Siloxane, im folgenden auch Cyclosiloxane genannt, sind Verbindungen der allgemeinen Formel 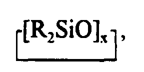 worin R die oben angegebene Bedeutung besitzt und x Werte von 3 bis 12 annehmen kann.

Überraschenderweise gelingt es mit dem erfindungsgemäßen Verfahren unter Verwendung nur eines Katalysators zwei verschiedene Reaktionstypen zu katalysieren. Dabei wird in einer ersten Stufe eine Polymerisation durchgeführt unter dem Einfluß einer höheren Konzentration desselben Katalysators, der in einer viel niedrigeren Konzentration in der zweiten Stufe die Polykondensation katalysiert. Das bringt den großen Vorteil, daß in der ersten Stufe leicht flüchtigen Ausgangsverbindungen umgesetzt werden können, und das Reaktionsprodukt in der zweiten Stufe mit den silanolhaltigen Diorganosiloxanen reagiert, ohne daß nochmals Katalysator zugesetzt werden muß, bzw. die Zwischenprodukte isoliert werden müssen.

Durch eine sorgfältige Berechnung der Konzentrationen der Ausgangskomponenten besitzt das Reaktionsprodukt aus der ersten Stufe sowohl die Funktion des Molekulargewichtsreglers als auch die des Katalysators, während es zusammen mit dem silanolhaltigen Diorganosiloxan der Polykondensationsreaktion mit partieller Äquilibrierung unterzogen wird.

Die Äquilibrierungsreaktion in der ersten Stufe wird bei Temperaturen im Bereich von 20 bis 200 °C, vorzugsweise bei 20 bis 120 °C, durchgeführt. Die erforderlichen Reaktionszeiten sind von der Temperatur und der Katalysatorkonzentration abhängig und liegen zwischen 5 min und 24 h. Die Katalysatorkonzentrationen können zwischen 10 und 10.000 ppm betragen, vorzugsweise werden Konzentrationen von 50 bis 5.000 ppm angewendet.

Nach dem erfindungsgemäßen Verfahren können z. B. Polydimethylsiloxane mit Trimethyl- bzw. Dimethylvinylsiloxy-Endgruppen unterschiedlichen Molekulargewichtes hergestellt werden, wobei keine niedermolekularen Polydimethylsiloxane mit Trimethyl- bzw. Dimethylvinylsiloxy-Endgruppen separat hergestellt werden müssen, sondern direkt von Hexamethyl- bzw. sym.-Tetramethyldivinyldisiloxan ausgegangen wird. Auch bei der Herstellung von Polysiloxanen, die Methylvinylsiloxygruppen enthalten, kann vom leicht zugängigen 1,3,5,7-Tetramethyl-1,3,5,7-tetravinylcyclotetrasiloxan ausgegangen werden. Damit vereinfacht sich z. B. die Herstellung von Polymeren, die für heißvulkanisierende Siliconkautschuke eingesetzt werden, beträchtlich.

Das erfindungsgemäße Verfahren ist kontinuierlich oder diskontinuierlich durchführbar.

Bei der diskontinuierlichen Arbeitsweise wird eine Mischung aus dem Katalysator [z. B. Reaktionsprodukt von Phosphornitrilchlorid, Tris(trimethylsilyl)phosphat und Cyclosiloxanen] einem Polysiloxan mit Triorganosiloxy-Endgruppen beliebigen Molekulargewichtes, Hexaorganodisiloxan und gegebenenfalls einem Cyclosiloxan hergestellt. Das Polysiloxan mit TriorganosiloxyEndgruppen dient dabei als Verdünnungsmittel. Diese Mischung wird nach 24 h bei Raumtemperatur stehen gelassen.
Die sich anschließende Polykondensation mit partieller Äquilibrierung wird in einem beheizbaren und evakuierbaren Reaktionsraum, beispielsweise einen Reaktionskneter, durchgeführt. Je nach Wahl der Art und Menge der Ausgangsstoffe können unterschiedliche Polymere hergestellt werden.

Bei kontinuierlicher Arbeitsweise wird ebenfalls eine Mischung aus dem Katalysator, einem Polysiloxan mit Triorganosiloxy-Endgruppen beliebigen Molekulargewichtes, Hexaorganodisiloxan und gegebenenfalls einem Cyclosiloxan kontinuierlich durch einen beheizbaren Reaktionsraum, beispielsweise einen statischen Mischer geleitet, wobei die mittlere Verweilzeit 10 bis 360 min beträgt. Anschließend wird das erhaltene Reaktionsgemisch in einem weiteren statischen Mischer mit α,ω-Dihydroxypolydimethylsiloxan vermischt und durch einen beheizbaren und evakuierbaren Reaktionsraum, beispielsweise einen Dünnschichtverdampfer oder einen kontinuierlich arbeitenden Reaktionskneter, gefördert. Auch hierbei können je nach Wahl der Art und Menge der Ausgangsstoffe unterschiedliche Polymere hergestellt werden.

Die Katalysatorkonzentration in der zweiten Verfahrensstufe beträgt üblicherweise 10 bis 50 Gew.-ppm, berechnet auf verwendetes Phosphornitrilchiorid und bezogen auf das Gesamtgewicht der Ausgangsstoffe. Die Reaktion wird bei Drücken zwischen 0,1 und 10 hPa und bei Temperaturen zwischen 80 und 150 °C durchgeführt.

Als Neutralisationsmittel (Desaktivatoren) können im Prinzip alle nukleophilen und/oder basischen Substanzen verwendet werden. Als Beispiele für solche Verbindungen seien hier tertiäre, auch trimethylsilylsubstituierte Amine, primäre und sekundäre Amine und Silylamine, Buthyllithium, Silazane, basische Metalloxide, -hydroxide und -carbonate sowie Epoxy-Verbindungen genannt.

Die durch das erfindungsgemäße Verfahren hergestellten Produkte zeichnen sich insbesondere durch einen extrem niedrigen Silanolgehalt aus, sind im wesentlichen frei von cyclischen Siloxanen und besitzen die für Polysiloxane typische Molekulargewichtsverteilung.

### Ausführungsbeispiele

### Beispiel 1

### Vollkontinuierliche Herstellung eines Polydimethylsiloxanes mit Dimethylvinylsiloxy-Endgruppen mittlerer Viskosität

100 g/h einer Mischung aus 90 Gew.-% eines Polydimethylsiloxanes mit Dimethylvinylsiloxy-Endgruppen, das bei 25 °C eine Viskosität von 1.000 mPas aufwies und 10 Gew.-% 1,1,3,3-Tetramethyl-1,3-divinyldisiloxan wurden zusammen mit 0,25 g/h des Umsetzungsproduktes von Phosphornitrilchlorid mit Tris(trimethylsilyl)phosphat und cyclischen Siloxanen, das gemäß DE 4323184, Beispiel 1 hergestellt wurde, durch einen auf 100 °C erwärmten statischen Mischer gepumpt, mit 1000 g/h linearem DDS-Hydrolysat sowie weiteren 0,25 g/h des oben beschriebenen Polykondensationskatalysators in einem zweiten statischen Mischer homogenisiert und in einen Dünnschichtverdampfer eingespeist. Bei einem Reaktionsdruck von 80 Pa und einer Temperatur von 120 °C erfolgte die Umsetzung zu einem Polydimethylsiloxan mit Dimethylvinylsiloxy-Endgruppen, das bei 25 °C eine Viskosität von 2.300 mPas aufwies. Nach Verlassen des Dünnschichtverdampfers wurde der Katalysator durch Zugabe von 2 g/h einer 1 gew.-%igen Lösung von Triisooctylamin in einem Polydimethylsiloxan mit Dimethylvinylsiloxy-Endgruppen, das bei 25 °C eine Viskosität von 1.000 mPas aufwies, desaktiviert.

### Beispiel 2

### Vollkontinuierliche Herstellung eines Polydimethylsiloxanes mit Dimethylvinylsiloxy-Endgruppen hoher Viskosität

Es wurde analog Beispiel 1 verfahren, mit folgenden Änderungen:
Von der Mischung aus 90 Gew.-% eines Polydimethylsiloxanes mit Dimethylvinylsiloxy-Endgruppen, das bei 25 °C eine Viskosität von 1000 mPas aufwies und 10 Gew.-% 1,1,3,3-Tetramethyl-1,3-divinyldisiloxan sowie 0,25 g/h des Umsetzungsproduktes von Phosphornitrilchlorid mit Tris(trimethylsilyl)phosohat und cyclischen Siloxanen wurden nur 20 g/h durch einem statischen Mischer gepumpt, mit 1000 g/h lineraem DDS-Hydrolysat sowie weiteren 0,65 g/h des oben beschriebenen Polykondensationkatalysators in einem zweiten statischen Mischer homogenisiert und in einen Dünnschichtverdampfer eingespeist. Das erhaltene Polydimethylsiloxan mit Dimethylvinylsiloxy-Endgruppen wies bei 25 °C eine Viskosität von 205.000 mPas auf

### Beispiel 3

### Herstellung von Polydimethylsiloxanen, die Methylvinylsiloxygruppen enthalten

### Vormischung 1

Eine Mischung aus 32 g Katalysator aus Beispiel 1, 3,2 g 1,1,3,3-Tetramethyl-1,3-divinyldisiloxan sowie 1,84 g 1,3,5,7-Tetramethyl-1,3,5,7-tetravinylcyclotetrasiloxan wurde einen Tag bei Raumtemperatur stehen gelassen.

### Vormischung 2

Eine Mischung aus 32 g Katalysator aus Beispiel 1, 3,2 g 1,1,3,3-Tetramethyl-1,3-divinyldisiloxan sowie 4,64 g 1,3,5,7-Tetramethyl-1,3,5,7-tetravinylcyclotetrasiloxan wurde einen Tag bei Raumtemperatur stehen gelassen.

### Vormischung 3

Eine Mischung aus 32 g Katalysator aus Beispiel 1, 3,2 g 1,1,3,3-Tetramethyl-1,3-divinyldisiloxan sowie 18,4 g 1,3,5,7-Tetramethyl-1,3,5,7-tetravinylcyclotetrasiloxan wurde einen Tag bei Raumtemperatur stehen gelassen.

### Vormischung 4

Eine Mischung aus 32 g Katalysator aus Beispiel 1, 1,81 g Hexamethyldisiloxan sowie 18,4 g 1,3,5,7-Tetramethyl-1,3,5,7-tetravinylcyclotetrasiloxan wurde einen Tag bei Raumtemperatur stehen gelassen.

### Vormischung 5

Eine Mischung aus 32 g Katalysator aus Beispiel 1, 0,9 g 1,1,3,3-Tetramethyl-1,3-divinyldisiloxan, 0,9 g Hexamethyldisiloxan sowie 18,4 g 1,3,5,7-Tetramethyl-1,3,5,7-tetravinylcyclotetrasiloxan wurde einen Tag bei Raumtemperatur stehen gelassen.

### Beispiel 3.1

37 g der Vormischung 1 wurden zusammen mit 8 kg eines α,ω-Dihydroxypolydimethylsiloxanes, das bei 25 °C eine Viskosität von 100 mPas aufwies, in einem evakuierbaren Reaktionskneter bei 90 °C und einem Druck von 200 Pa einer Polykondensationsreaktion mit partieller Äquilibrierung unterzogen. Nach einer Reaktionszeit von 2 h und der Belüftung mit Stickstoffwurde der Katalysator mit 8 g Hexamethyldisilazan desaktiviert. Es wurde ein Polydimethylsiloxymethylvinylsiloxan mit Dimethylvinylsiloxy-Endgruppen erhalten, das eine Viskosität von 35.000 Pas bei 25 °C und einen Gehalt an Methylvinylsiloxyeinheiten von 0,02 mol-% aufwies.

### Beispiel 3.2

Das Beispiel veranschaulicht die Variante der kontinuierlichen Herstellung des Polymeren gemäß Beispiel 3.1.
139 g/h der Vormischung 1 wurden zusammen mit 30 kg/h eines α,ω-Dihydroxypolydimethylsiloxanes, das bei 25 °C eine Viskosität von 100 mPas aufwies, in einen evakuierbaren und kontinuierlich arbeitenden Reaktionskneter vom Typ CRP CONTI bei 120 °C und einem Druck von 1 hPa einer Polykondensationsreaktion mit partieller Äquilibrierung unterzogen. Nach einer mittleren Verweilzeit von 50 min wurde der Katalysator desaktiviert, indem das Polymer zusammen mit 30 g/h Hexamethyldisilazan durch einen statischen Mischer gepumpt wurde. Es wurde ein Polydimethylsiloxymethylvinylsiloxan mit Dimethylvinylsiloxy-Endgruppen erhalten, das eine Viskosität von 39.000 Pas bei 25 °C und einen Gehalt an Methylvinylsiloxyseinheiten von 0,02 mol-% aufwies.

### Beispiel 3.3 (Vergleichsbeispiel)

Es wurde wie in Beispiel 3.2 verfahren, mit dem Unterschied, daß statt 139 g/h der Vormischung 1 44.2 g/h eines Gemisches aus 32 g eines Polydimethylsiloxanes mit Dimethylvinylsiloxy-Endgruppen, deren Konzentration 10 Gew.-% betrug und 12,2 g eines α,ω-Dihydroxypolydimethylsiloxymethylvinylsiloxanes, das 15 Gew.-% Methylvinylsiloxygruppen enthielt und bei 25 °C eine Viskosität von 5000 mPas aufwies, eingesetzt wurde. Außerdem wurden 60 g/h des Umsetzungsproduktes von Phosohornitrilchlorid mit Tris(trimethylsilyl)phosohat und cyclischen Siloxanen, das gemäß DE 4323184, Beispiel 1 hergestellt wurde zudosiert. Es wurde ein Polydimethylsiloxymethylvinylsiloxan mit Dimethylvinylsiloxy-Endgruppen erhalten, das eine Viskosität von 38500 Pas bei 25 °C und einen Gehalt an Methylvinylsiloxyeinheiten von 0,02 mol-% aufwies.

### Beispiel 3.4

### Beurteilung der gemäß Beispiel 3.2 und 3.3 erhaltenen Polymeren durch Herstellung von Compounds und Prüfung der mechanischen Eigenschaften nach Vulkanisation derselben

In einem Knetapparat vom Typ CRP BATCH oder ORP BATCH wurden 4,7 kg Polymer aus Beispiel 3.2 (entspricht Beispiel 3.4 A) bzw. 4,7 kg Polymer aus Beispiel 3.3 (entspricht Beispiel 3.4 B) sowie jeweils 0,14 kg Diphenylsilandiol, 0,56 kg Polydimethylsiloxandiol mit einer Viskosität, gemessen bei 25 °C, von 63 mPas und einem Gehalt an Silicium gebundenen Hydroxylgruppen von 1,4 Gew.-% und 9,4 g Hexamethyldisilazan vorgelegt. Nach Erwärmung auf 60 °C wurden 2,6 kg pyrrogene Kieselsäure mit einer spezifischen Oberfläche (BET) von 200 m²/g (Cab-O-Sil M5, CABOT) eingemischt. Die Masse wird auf 160 °C erwärmt und 1 h geknetet. Nach einer 10 minütigen Entgasungsphase bei 150 °C und 20 hPa wurden mit dem erkalteten Compound Vulkanisate hergestellt. Dazu wurden die Massen mit je 0,5 Gew.-% 2,5 Bis(t-butylperoxy)2,5-dimethylhexan, einem Peroxid, das nur eine Vernetzung über Vinylgruppen bewirkt, vermischt und 10 min bei 170 °C vulkanisiert und 4 h lang bei 200 °C im Umluftofen getempert. Tabelle 1 zeigt den Vergleich des Vulkanisationsverhaltens und der mechanischen Kennwerte der Vulkanisate.

**Tabelle 1**

| Kennwert | Einheit | Beisp. 3.4 A | Beisp. 3.4. B |
|---|---|---|---|
| Anvulkanisationszeit | min | 4,6 | 5,1 |
| Anvulkanisationsgeschwindigkeit | Mooney/min | 60 | 60 |
| Härte | Shore-A | 58 | 56 |
| Zugfestigkeit | MPa | 9,0 | 8,7 |
| Reißdehnung | % | 650 | 645 |
| Weiterreißfestigkeit | N/mm | 33 | 26 |
| Elastizität | % | 40 | 39 |
| Druckverformungsrest | % | 35 | 35 |

Wie der Vergleich der beiden Beispiele zeigt, lassen sich mit dem erfindungsgemäßen Verfahren Polymere herstellen, die in ihren Compounds ein vergleichbares Vulkanisationsverhalten und die gleichen Vulkanisateigenschaften hervorrufen, wie sie mit auf herkömmlichen Wege hergestellten Polymeren erreicht wurden. Dieser Vergleich trifft auch auf alle nach den nachfolgenden Beispielen hergestellten Polymere zu.

### Beispiel 3.5

37 g der Vormischung 2 wurden zusammen mit 8 kg eines α,ω-Dihydroxypolydimethylsiloxanes, das bei 25 °C ein Viskosität von 100 mPas aufwies in einem evakuierbaren Reaktionskneter bei 90 °C und einem Druck von 200 Pa einer Polykondensationsreaktion mit partieller Äquilibrierung unterzogen. Nach einer Reaktionszeit von 2 h und der Belüftung mit Stickstoff wurde der Katalysator mit 8 g Hexamethyldisilazan desaktiviert. Es wurde ein Polydimethylsiloxymethylvinylsiloxan mit Dimethylvinylsiloxy-Endgruppen erhalten, das eine Viskosität von 45.000 Pas bei 25 °C und einen Gehalt an Methylvinylsiloxyeinheiten von 0,05 mol-% aufwies.

### Beispiel 3.6

37 g der Vormischung 3 wurden zusammen mit 8 kg eines α,ω-Dihydroxypolydimethylsiloxanes, das bei 25 °C eine Viskosität von 100 mPas aufwies, in einem evakuierbaren Reaktionskneter bei 90 °C und einem Druck von 200 Pa einer Polykondensationsreaktion mit partieller Äquilibrierung unterzogen. Nach einer Reaktionszeit von 2 h und der Belüftung mit Stickstoff wurde der Katalysator mit 8 g Hexamethyldisilazan desaktiviert. Es wurde ein Polydimethylsiloxymethylvinylsiloxan mit Dimethylvinylsiloxy-Endgruppen erhalten, das eine Viskosität von 49.000 Pas bei 25 °C und einen Gehalt an Methylvinylsiloxyeinheiten von 0,2 mol-% aufwies.

### Beispiel 3.7

37 g der Vormischung 4 wurden zusammen mit 8 kg eines α,ω-Dihydroxypolydimethylsiloxanes, das bei 25 °C eine Viskosität von 100 mPas aufwies, in einem evakuierbaren Reaktionskneter bei 90 °C und einem Druck von 200 Pa einer Polykondensationsreaktion mit partieller Äquilibrierung unterzogen. Nach einer Reaktionszeit von 2 h und der Belüftung mit Stickstoff wurde der Katalysator mit 8 g Hexamethyldisilazan desaktiviert. Es wurde ein Polydimethylsiloxymethylvinylsiloxan mit Trimethylsiloxy-Endgruppen erhalten, das eine Viskosität von 48.000 Pas bei 25 °C und einen Gehalt an Methylvinylsiloxyeinheiten von 0,2 mol-% aufwies.

### Beispiel 3.8

37 g der Vormischung 5 wurden zusammen mit 8 kg eines α,ω-Dihydroxypolydimethylsiloxanes, das bei 25 °C eine Viskosität von 100 mPas aufwies, in einem evakuierbaren Reaktionskneter bei 90 °C und einem Druck von 200 Pa einer Polykondensationsreaktion mit partieller Äquilibrierung unterzogen. Nach einer Reaktionszeit von 2 h und der Belüftung mit Stickstoff wurde der Katalysator mit 8 g Hexamethyldisilazan desaktiviert. Es wurde ein Polydimethylsiloxymethylvinylsiloxan mit Trimethylsiloxy- und Dimethylvinylsiloxy-Endgruppen erhalten, das eine Viskosität von 44.000 Pas bei 25 °C und einen Gehalt an Methylvinylsiloxyeinheiten von 0,2 mol-% aufwies.

## Patentansprüche

1. Verfahren zur Herstellung von Polyorganosiloxanen, dadurch gekennzeichnet, daß in einer ersten Stufe lineare und/oder cyclische silanolgruppenfreie Siloxane äquilibriert werden und das erhaltene Reaktionsprodukt in einer zweiten Stufe mit silanolgruppenhaltigen Polydiorganosiloxanen umgesetzt wird, wobei beide Stufen in Gegenwart des gleichen Katalysators durchgeführt werden.

2. Verfahren nach Anspruch 1, dadurch gekennzeichnet, daß als Katalysator Phosphornitrilchlorid und/oder dessen Umsetzungsprodukte eingesetzt werden.

3. Verfahren nach Anspruch 2, dadurch gekennzeichnet, daß als Katalysator mindestens ein Umsetzungsprodukt von Phosphornitrilchlorid mit einer Verbindung der allgemeinen Formel [R¹₃SiO(R¹₂SiO)ₘ]₃P=O, worin R¹ unabhängig voneinander gleiche oder verschiedene, ungesättigte und/oder gesättigte einwertige Kohlenwasserstoffreste mit 1 bis 6 Kohlenstoffatomen oder Wasserstoff mit der Maßgabe bedeutet, daß nur ein Wasserstoffatom pro Silicium gebunden ist und m einen Wert zwischen 0 und 1000 annimmt, wobei gegebenenfalls sich während der Umsetzung bildende, leichtflüchtige, Chlor enthaltende Silicium-Verbindungen vollständig oder teilweise abgetrennt werden, eingesetzt wird.

4. Verfahren nach Anspruch 1, dadurch gekennzeichnet, daß das aus der ersten Stufe erhaltene Reaktionsprodukt gegenüber dem in der zweiten Stufe eingesetzten silanolgruppenhaltigen Diorganosiloxan katalytisch aktiv ist.

5. Verfahren nach Anspruch 1, dadurch gekennzeichnet, daß die verwendeten linearen und/oder cyclischen silanolgruppenfreien oligomeren Siloxane leichtflüchtig sind.

6. Verfahren nach Anspruch 1, dadurch gekennzeichnet, daß als lineare und/oder cyclische silanolgruppenfreie oligomere Siloxane Hexamethyldisiloxan, 1,1,3,3-Tetramethyl-1,3-divinyldisiloxan. 1,1,3,3-Tetramethyldisiloxan und/oder 1,3,5,7-Tetramethyl-1,3,5,7-tetravinylcyclotetrasiloxan eingesetzt werden.

7. Verfahren nach Anspruch 1, dadurch gekennzeichnet, daß als silanolgruppenhaltige oligomere Diorganosiloxane α,ω-Dihydroxydimethylsiloxane eingesetzt werden.
